# FASCICULE DE BREVET EUROPEEN

(11) **EP 2 527 224 B1**
(45) Date de publication et mention de la délivrance du brevet: **30.04.2014**
(21) Numéro de dépôt: 12168690.1
(22) Date de dépôt: 21.05.2012
(51) Int. Cl.: B61F 5/30, B61H 5/00

(54) **Bogie de véhicule ferroviaire comprenant une suspension primaire agencé entre une boîte d'essieu et le châssis du bogie**
Eisenbahndrehgestell mit Primärfederung
Railway bogie with a primary suspension

(30) Priorité: 24.05.2011 FR 1154503
(43) Date de publication de la demande: 28.11.2012
(73) Titulaire: ALSTOM Transport SA, 92300 Levallois-Perret (FR)
(72) Inventeur: Cottin, Fabrice, 71670 SAINT FIRMIN (FR); Liodenot, Frédéric, 71670 LE BREUIL (FR)
(74) Mandataire: Blot, Philippe Robert Emile

(56) Documents cités:
- EP-A1- 0 212 348
- DE-A1- 2 309 702
- FR-A- 1 419 226
- US-A- 5 189 962

## Description

La présente invention concerne un bogie de véhicule ferroviaire du type comprenant :
- un châssis s'étendant sensiblement longitudinalement ;
- au moins un essieu s'étendant sensiblement transversalement et monté en rotation par rapport au châssis, une roue étant montée sur chacune des parties extrêmes transversales dudit essieu,
- au moins une boîte d'essieu montée sur une extrémité transversale de l'essieu, au-delà d'une roue selon la direction transversale, l'essieu étant mobile en rotation dans ladite boîte d'essieu,
- une suspension primaire montée entre le châssis et la boîte d'essieu, ladite suspension comprenant un élément de suspension verticale agencé pour suspendre l'essieu par rapport au châssis selon une direction verticale, ledit élément de suspension verticale étant disposé sur un élément de support solidaire de la boîte d'essieu au droit de l'extrémité transversale de l'essieu, et au moins un premier élément de suspension longitudinale et transversale agencé pour suspendre l'essieu par rapport au châssis selon les directions longitudinale et transversale, ledit premier élément de suspension longitudinale et transversale étant disposé dans un premier logement de support s'étendant sur un côté de l'élément de support selon la direction longitudinale.

Le document DE-2 309 702 décrit par exemple un tel bogie.

L'invention s'applique à tout type de véhicules ferroviaires, mais est plus particulièrement adaptée pour les trains à grande vitesse, dans lesquels la reprise des efforts, aussi bien verticaux qu'horizontaux, entre les essieux et le châssis du bogie est fondamentale pour s'adapter aux voies sur lesquels le train circule à grande vitesse en conservant le confort des passagers du train.

Pour ce faire, les essieux sont suspendus au châssis par des suspensions dites « primaires », agencées pour reprendre les efforts selon la direction verticale et selon les directions longitudinale et transversale dans un plan horizontal. Une suspension primaire comprend ainsi un élément de suspension verticale et deux éléments de suspension longitudinale et transversale agencés entre une boîte d'essieu et le châssis du bogie. La boîte d'essieu est montée sur l'extrémité de l'essieu vers l'extérieur du bogie et comprend un élément de support de l'élément de suspension verticale et deux logements de support des éléments de suspension longitudinale et transversale, disposés de part et d'autre de l'élément de support selon la direction longitudinale.

Chaque logement de support présente une forme de cylindre à base circulaire afin de recevoir la base d'un ressort cylindrique comprimé radialement par une frette et dont la raideur selon les direction longitudinale et transversale est adaptée pour assurer la stabilité du train à très grande vitesse, par exemple autour de 360 Km/h.

La boîte d'essieu est agencée au plus près de la roue adjacente afin de respecter le gabarit du train de sorte qu'il existe un espace le plus petit possible entre la roue et les logements cylindriques de support des éléments de suspension longitudinale et transversale. Cet espace ne permet pas le montage de pièces supplémentaires autour de la roue.

Cet espace empêche notamment le montage d'un dispositif de freinage à disque, dans lequel un disque de frein, monté dans la roue, est actionné par une fourche dont les branches passent autour de la roue. Un tel dispositif de freinage serait cependant particulièrement adapté pour un train à très grande vitesse car il est très performant et plus efficace que le système de freinage à semelle sur table de roulement, actuellement employé.

Pour agencer un tel dispositif de freinage avec la suspension primaire, il faudrait décaler la boîte d'essieu vers l'extérieur afin d'augmenter l'espace entre la roue et le logement de support d'un des éléments de suspension longitudinale et transversale. Cependant, il est impossible de décaler l'ensemble de la boîte d'essieu car le porte-à-faux par rapport au châssis serait alors trop important et la boîte d'essieu enfreindrait alors le gabarit du train.

L'un des buts de l'invention est de proposer un bogie permettant à la fois d'avoir une suspension primaire telle que décrite ci-dessus et un dispositif de freinage à disque, sans que la boîte d'essieu enfreigne le gabarit du train.

A cet effet, l'invention concerne un bogie du type précité, dans lequel le centre du premier logement de support est décalé vers l'extérieur du bogie selon la direction transversale par rapport au centre de l'élément de support de sorte que la distance séparant la roue du centre du premier logement de support est supérieure à la distance séparant la roue du centre de l'élément de support.

Dans un tel bogie, seul le logement de support de l'élément de suspension longitudinale et transversale est décalé vers l'extérieur, ce qui permet de créer un espace entre la roue et le logement suffisant pour le passage d'une partie d'un actionneur de frein à disque, tout en limitant le porte-à-faux de l'ensemble de la boîte d'essieu.

Selon d'autres caractéristiques du bogie de l'invention :
- la suspension primaire comprend un deuxième élément de suspension longitudinale et transversale, ledit deuxième élément de suspension longitudinale et transversale étant disposé dans un deuxième logement de support s'étendant sur l'autre côté de l'élément de support selon la direction longitudinale par rapport au premier logement de support ;
- le centre du deuxième logement de support est décalé vers l'intérieur du bogie selon la direction transversale par rapport au centre de l'élément de support de sorte que la distance séparant la roue du centre du deuxième logement de support est inférieure à la distance séparant la roue du centre de l'élément de support ;
- la distance séparant le centre du deuxième logement de support du centre de l'élément de support est égale à la distance séparant le centre du premier logement de support du centre de l'élément de support ;
- l'élément de suspension longitudinale et transversale est formé par un ressort comprimé radialement s'étendant intégralement à l'intérieur du logement de support, la compression selon la direction radiale étant effectuée par une paroi interne dudit logement ;
- le ressort comprimé est un ressort du type caoutchouc sur métal, dont la partie en caoutchouc est comprimé radialement par la paroi interne du logement de support ;
- l'élément de suspension longitudinale et transversale présente une section de forme ovoïdale, dont le grand axe, passant par le centre du logement de support, s'étend sensiblement longitudinalement ;
- le logement de support de la suspension longitudinale et transversale est réalisé d'une seule pièce avec la boîte d'essieu ;
- l'élément de suspension verticale est un ressort hélicoïdal s'étendant entre l'élément de support et le châssis selon une direction sensiblement perpendiculaire aux directions longitudinale et transversale ;
- le bogie comprend au moins un disque de frein monté dans la roue autour de l'essieu en regard de la boîte d'essieu ; et
- le bogie comprend un dispositif d'actionnement du frein, ledit dispositif étant formé d'une fourche portant des patins de freinage agencés pour enserrer le disque de frein lorsque le dispositif d'actionnement est actionné, l'une des branche de ladite fourche s'étendant dans l'espace séparant la roue du premier logement de support du premier élément de suspension longitudinale et transversale.

D'autres aspects et avantages de l'invention apparaîtront à la lecture de la description qui suit, donnée à titre d'exemple et faite en référence aux dessins annexés, dans lesquels :
- la figure 1 est une représentation schématique vue de côté d'une partie d'un bogie selon l'invention,
- la figure 2 est une représentation schématique de dessus d'une partie d'un essieu d'un bogie selon l'invention.

Dans la description, le terme « longitudinal » est défini par rapport à la direction selon laquelle circule le véhicule ferroviaire, c'est-à-dire la direction dans laquelle s'étendent les rails sur lesquels ce véhicule ferroviaire circule. Le terme « transversal » est défini par rapport à une direction sensiblement perpendiculaire à la direction longitudinale dans un plan horizontal, c'est-à-dire la direction selon laquelle les rails sont écartés l'un de l'autre. Les termes « avant » et « arrière » sont définis par rapport à la direction de roulement du véhicule ferroviaire.

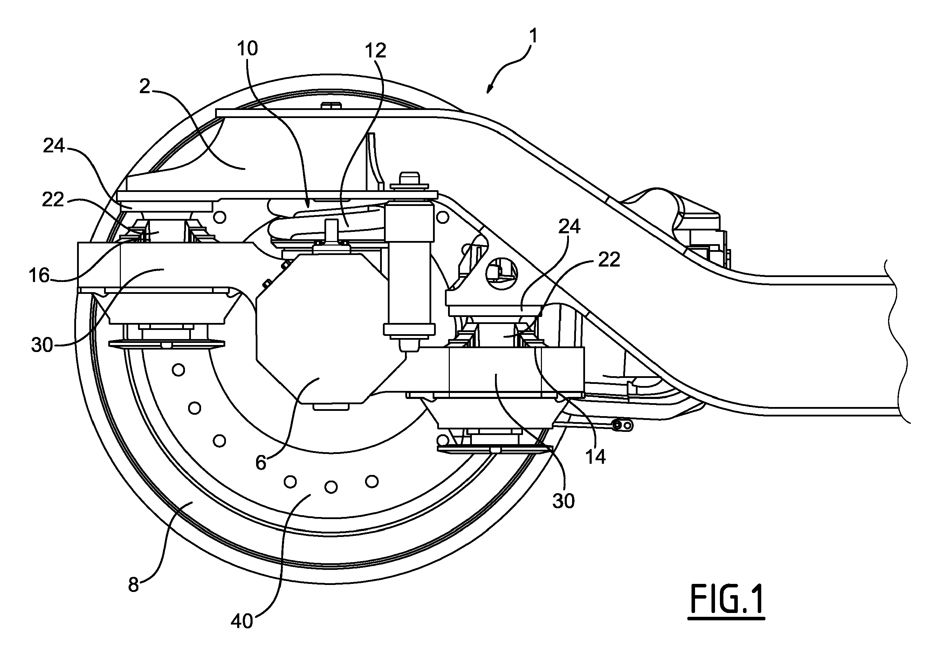

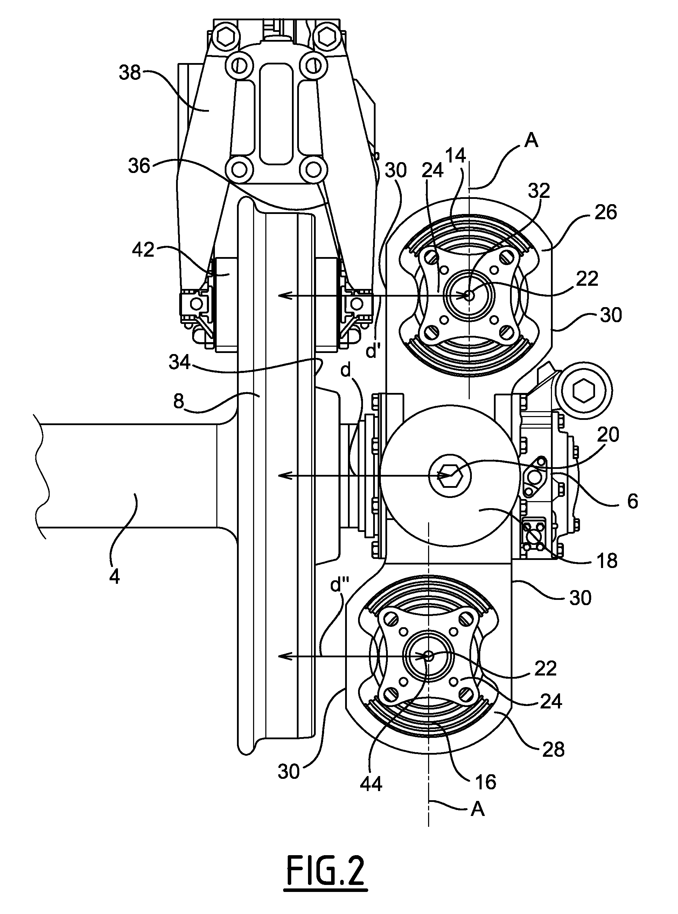

En référence aux figures 1 et 2, on décrit un bogie 1 de véhicule ferroviaire comprenant un châssis 2 s'étendant sensiblement longitudinalement et portant à chacune de ses parties extrêmes longitudinales un essieu 4 monté mobile en rotation dans deux boîtes d'essieu 6, chacune des boîtes d'essieu 6 étant disposée à une extrémité transversale de l'essieu 4. Chaque essieu 4 porte deux roues 8 fixées aux parties extrêmes transversales de l'essieu et solidaires en rotation de celui-ci. Les roues 8 sont adjacentes aux boîtes d'essieux 6 et sont disposées entre ces boîtes d'essieu 6. Pour des raisons de simplicité, seul un essieu 4, une roue 8 et une boîte d'essieu 6 ont été représentés sur les figures.

Les essieux 4 sont fixés au châssis 2 par des moyens de suspension, dits suspensions primaires 10, décrites plus en détail ci-dessous. Le bogie 1 est donc suspendu, ce qui permet d'amortir les déformations, telles que les gauches de voies, entre les essieux 4 et le châssis 2 et d'assurer la stabilité du véhicule ferroviaire, même à très grande vitesse. On notera que l'invention concerne aussi bien les bogies moteurs, c'est-à-dire comprenant des moyens de motorisation permettant d'entraîner un ou les deux essieux en rotation, que les bogies porteurs, c'est-à-dire des bogies dépourvus de moyens de motorisation.

Chaque boîte d'essieu 6 est formée par un corps moulé comprenant un orifice d'axe transversal à l'intérieur duquel une extrémité transversale de l'essieu 4 est montée en rotation. Le corps moulé forme également le support de la suspension primaire 10 s'étendant entre la boîte d'essieu 6 et le châssis 2 du bogie 1.

Afin d'assurer la reprise des efforts dans toutes les directions, la suspension primaire 10 comprend un élément de suspension verticale 12, un premier élément de suspension longitudinale et transversale 14 et un deuxième élément de suspension longitudinale et transversale 16.

L'élément de suspension verticale 12 est agencé pour suspendre l'essieu 4 par rapport au châssis 4 selon une direction verticale, c'est-à-dire pour reprendre les efforts entre l'essieu 4 et le châssis 2 selon la direction verticale. Cet élément de suspension verticale 12 est formé de façon classique par un ressort hélicoïdal d'axe sensiblement vertical, c'est-à-dire perpendiculaire aux directions longitudinale et transversale, s'étendant entre un élément de support 18 solidaire de la boîte d'essieu 6 et le châssis 2, comme représenté sur la figure 1. L'élément de support 18 est disposé sur le corps moulé de la boîte d'essieu 6, au droit de l'orifice central de celui-ci, c'est-à-dire au droit de l'extrémité transversale de l'essieu 4. L'élément de support 18 est par exemple formé par une platine métallique circulaire, dont le centre 20 est écarté d'une distance prédéfinie d de la roue 8 selon la direction transversale, comme représenté sur la figure 2. La distance d est la distance séparant le centre 20 de l'élément de support 18 du centre de la roue 8. Cette distance d est classique pour ce type de bogie 1 et est agencée pour que la boîte d'essieu 6 respecte le gabarit du véhicule ferroviaire. Selon un mode de réalisation, la distance d est sensiblement égale à 300 mm.

Les premier et deuxième éléments de suspension longitudinale et transversale 14 et 16 sont agencés pour suspendre l'essieu 4 selon les directions longitudinale et transversale, c'est-à-dire pour reprendre les efforts entre l'essieu 4 et le châssis 2 selon les directions longitudinale et transversale. A cet effet, chaque élément de suspension longitudinale et transversale est formé par un ressort comprimé radialement, par exemple du type ressort caoutchouc sur métal solidaire de la boîte d'essieu 6 et coopérant avec une broche 22 solidaire du châssis, par l'intermédiaire d'une platine 24, et s'étendant au centre du ressort comprimé radialement, les mouvements radiaux entre l'essieu 4 et le châssis 2 étant absorbés par compression du ressort lors des mouvements de la broche 22, de façon connue. Chaque ressort comprimé radialement présente une section de forme ovoïdale, dont le grand axe A s'étend sensiblement longitudinalement, comme représenté sur la figure 2.

Le premier élément de suspension longitudinale et transversale 14 est intégralement disposé dans un premier logement de support 26, formé d'une seule pièce avec le corps moulé de la boîte d'essieu et s'étendant en arrière de l'élément de support 18 de l'élément de suspension verticale 12 selon la direction longitudinale.

Le deuxième élément de suspension longitudinale et transversale 16 est intégralement disposé dans un deuxième logement de support 28, formé d'une seule pièce avec le corps moulé de la boîte d'essieu et s'étendant en avant de l'élément de support 18 de l'élément de suspension verticale 12 selon la direction longitudinale.

Comme mentionné ci-dessus, les éléments de suspension longitudinale et transversale 14 et 16 sont intégralement disposés dans leur logement de support 26 et 28 respectif, à la différence de l'art antérieur dans lequel seule la base des ressorts est reçue dans un logement et dans lequel une frette externe, entourant le ressort assure la compression radiale du ressort. Selon l'invention, la compression radiale des éléments de suspension 14 et 16 est assurée par une paroi interne du logement, présentant une forme sensiblement complémentaire à celle du ressort comprimé, c'est-à-dire une section de forme ovoïdale, dont le grand axe est confondu avec le grand axe du ressort comprimé radialement et passe par le centre du logement de support, comme représenté sur la figure 2. Ainsi, selon l'invention, le frettage du ressort comprimé radialement est assuré par le logement de support de celui-ci. C'est-à-dire que pour un ressort du type caoutchouc sur métal, la partie en caoutchouc est comprimé radialement par la paroi du logement de support.

Un tel mode de réalisation est avantageux car il permet de réduire, notamment dans la direction transversale, la dimension des logements de support 26 et 28 qui n'ont plus à être agencés pour loger la frette externe des ressorts comprimés radialement. D'autre part, la forme ovoïdale, dont le grand axe s'étend longitudinalement, permet de réduire encore la largeur des logements de support 26 et 28, c'est-à-dire leur dimension selon la direction transversale, comme on peut le voir sur la figure 2, par rapport aux logements de support ayant la forme d'un cylindre à base circulaire de l'art antérieur. Les logements de support 26 et 28 peuvent ainsi avoir des bords longitudinaux 30 sensiblement plans et non incurvés, comme c'est le cas dans l'art antérieur. A titre d'exemple, les logements de support 26 et 28 selon l'invention présente une largeur sensiblement comprise entre 280 mm et 300 mm, alors que ceux de l'art antérieur présente une largeur sensiblement comprise entre 340 mm et 400 mm. L'encombrement des logements de support 26 et 28 est donc réduit, notamment selon la direction transversale.

Le centre 32 du premier logement de support 26 est décalé vers l'extérieur du bogie 1 selon la direction transversale, c'est-à-dire que la distance d' séparant le centre 32 du premier logement de support 26 de la roue 8 est supérieure à la distance d séparant le centre 20 de l'élément de support 18 de la roue 8, comme représenté sur la figure 2. Le premier logement de support 26 est ainsi décalé vers l'extérieur par rapport au reste de la boîte d'essieu 6 selon la direction transversale, ce qui permet d'augmenter l'espace disponible entre le bord latéral 30 du premier logement 26 s'étendant en regard de la roue et la face externe 34 de la roue. Selon un mode de réalisation, la distance d' est sensiblement égale à 335 mm, de sorte que l'espace disponible entre le bord latéral 30 et la face externe de la roue 34 présente une largeur sensiblement égale à 130 mm.

Un tel espace permet de faire passer une des branches 36 d'une fourche 38 formant le dispositif d'actionnement d'un dispositif de frein à disque, dont le disque de frein 40 est monté dans la roue 8 autour de l'essieu 4 en regard de la boîte d'essieu 6. L'autre branche de la fourche 38 passe de l'autre côté de la roue 8 et chaque branche porte à son extrémité un patin de freinage 42, les patins étant agencés pour enserrer le disque de frein 40 lorsque le dispositif d'actionnement est actionné de façon connue. Un tel dispositif de frein à disque est particulièrement efficace pour un train circulant à très grande vitesse, par exemple à des vitesses voisines de 360 Km/h.

Le dégagement de l'espace entre la face externe 34 de la roue 8 et la paroi latérale 30 en regard du premier logement de support 26 peut se faire sans que le premier logement de support 26 enfreigne le gabarit du véhicule ferroviaire grâce à la réduction de la dimension selon la direction transversale du premier logement de support 26, comme décrit ci-dessus.

Par ailleurs, afin d'assurer la stabilité du véhicule ferroviaire par la suspension primaire 10, il convient de compenser le décalage vers l'extérieur du premier élément de suspension longitudinale et transversale 14 par un décalage du même ordre vers l'intérieur du deuxième élément de suspension longitudinale et transversale 16. A cet effet, le centre 44 du deuxième logement de support 28 est décalé vers l'intérieur du bogie 1 selon la direction transversale, c'est-à-dire que la distance d" séparant le centre 44 du deuxième logement de support 28 de la roue 8 est supérieure à la distance d séparant le centre 20 de l'élément de support 18 de la roue 8, comme représenté sur la figure 2. Selon un mode de réalisation, la distance d" est sensiblement égale à 265 mm, de sorte que la distance séparant le centre 20 de l'élément de support 18 du centre 32 du premier logement de support 26 est égale à la distance séparant le centre 20 de l'élément de support 18 du centre 44 du deuxième logement de support 28.

Un tel décalage vers l'intérieur du deuxième élément de suspension longitudinale et transversale est possible du fait de la réduction de la dimension selon la direction transversale du deuxième logement de support 28, comme décrit ci-dessus.

La boîte d'essieu décrite ci-dessus permet à la fois d'avoir une suspension primaire 10 assurant la stabilité du véhicule ferroviaire et un dispositif de frein à disque particulièrement efficace pour les véhicules ferroviaires circulant à très grande vitesse sans augmenter le gabarit de ces véhicules ferroviaires.

La suspension primaire 10 décrite ci-dessus peut être prévue pour toutes les roues d'un bogie, tandis que le dispositif de freinage peut n'être prévu que pour une roue 8 d'un essieu 4 ou sur également pour toutes les roues du bogie.

## Revendications

1. Bogie (1) de véhicule ferroviaire, comprenant :
- un châssis (2) s'étendant sensiblement longitudinalement ;
- au moins un essieu (4) s'étendant sensiblement transversalement et monté en rotation par rapport au châssis (2), une roue (8) étant montée sur chacune des parties extrêmes transversales dudit essieu (4),
- au moins une boîte d'essieu (6) montée sur une extrémité transversale de l'essieu (4), au-delà d'une roue (8) selon la direction transversale, l'essieu (4) étant mobile en rotation dans ladite boîte d'essieu (6),
- une suspension primaire (10) montée entre le châssis (2) et la boîte d'essieu (6), ladite suspension (10) comprenant un élément de suspension verticale (12) agencé pour suspendre l'essieu (4) par rapport au châssis (2) selon une direction verticale, ledit élément de suspension verticale (12) étant disposé sur un élément de support (18) solidaire de la boîte d'essieu (6) au droit de l'extrémité transversale de l'essieu (4), et au moins un premier élément de suspension longitudinale et transversale (14) agencé pour suspendre l'essieu (4) par rapport au châssis (2) selon les directions longitudinale et transversale, ledit premier élément de suspension longitudinale et transversale (14) étant disposé dans un premier logement de support (26) s'étendant sur un côté de l'élément de support (18) selon la direction longitudinale,
**caractérisé en ce que** le centre (32) du premier logement de support (26) est décalé vers l'extérieur du bogie (1) selon la direction transversale par rapport au centre (20) de l'élément de support (18) de sorte que la distance (d') séparant la roue (8) du centre (32) du premier logement de support (26) est supérieure à la distance (d) séparant la roue (8) du centre (20) de l'élément de support (18), selon la direction transversale.

2. Bogie selon la revendication 1, **caractérisé en ce que** la suspension primaire (10) comprend un deuxième élément de suspension longitudinale et transversale (16), ledit deuxième élément de suspension longitudinale et transversale (16) étant disposé dans un deuxième logement de support (28) s'étendant sur l'autre côté de l'élément de support (18) selon la direction longitudinale par rapport au premier logement de support (26).

3. Bogie selon la revendication 2, **caractérisé en ce que** le centre (44) du deuxième logement de support (28) est décalé vers l'intérieur du bogie selon la direction transversale par rapport au centre (20) de l'élément de support (18) de sorte que la distance (d") séparant la roue (8) du centre (44) du deuxième logement de support (28) est inférieure à la distance (d) séparant la roue (8) du centre (20) de l'élément de support (18).

4. Bogie selon la revendication 3, **caractérisé en ce que** la distance séparant le centre (44) du deuxième logement de support (28) du centre (20) de l'élément de support (18) est égale à la distance séparant le centre (32) du premier logement de support (26) du centre (20) de l'élément de support (18).

5. Bogie selon l'une quelconque des revendications 1 à 4, **caractérisé en ce que** l'élément de suspension longitudinale et transversale (14, 16) est formé par un ressort comprimé radialement s'étendant intégralement à l'intérieur du logement de support (26, 28), la compression selon la direction radiale étant effectuée par une paroi interne dudit logement (26, 28).

6. Bogie selon la revendication 5, **caractérisé en ce que** le ressort comprimé est un ressort du type caoutchouc sur métal, dont la partie en caoutchouc est comprimé radialement par la paroi interne du logement de support (26, 28).

7. Bogie selon l'une quelconque des revendications 1 à 6, **caractérisé en ce que** l'élément de suspension longitudinale et transversale (14, 16) présente une section de forme ovoïdale, dont le grand axe (A), passant par le centre (32, 44) du logement de support (26, 28), s'étend sensiblement longitudinalement.

8. Bogie selon l'une quelconque des revendications 1 à 7, **caractérisé en ce que** le logement de support (26, 28) de la suspension longitudinale et transversale (14, 16) est réalisé d'une seule pièce avec la boîte d'essieu (6).

9. Bogie selon l'une quelconque des revendications 1 à 8, **caractérisé en ce que** l'élément de suspension verticale (12) est un ressort hélicoïdal s'étendant entre l'élément de support (18) et le châssis (2) selon une direction sensiblement perpendiculaire aux directions longitudinale et transversale.

10. Bogie selon l'une quelconque des revendications 1 à 9, **caractérisé en ce qu'**il comprend au moins un disque de frein (40) monté dans la roue (8) autour de l'essieu (4) en regard de la boîte d'essieu (6).

11. Bogie selon la revendication 10, **caractérisé en ce qu'**il comprend un dispositif d'actionnement du frein, ledit dispositif étant formé d'une fourche (38) portant des patins de freinage (42) agencés pour enserrer le disque de frein (40) lorsque le dispositif d'actionnement est actionné, l'une des branche (36) de ladite fourche (38) s'étendant dans l'espace séparant la roue (8) du premier logement de support (26) du premier élément de suspension longitudinale et transversale (14).

## Patentansprüche

1. Drehgestell (1) für ein Schienenfahrzeug, umfassend:
- ein Chassis (2), das sich im Wesentlichen in Längsrichtung erstreckt;
- mindestens eine Achse (4), die sich im Wesentlichen in Querrichtung erstreckt und drehend in Bezug auf das Chassis (2) montiert ist, wobei ein Rad (8) auf jedem der transversalen Endbereiche der Achse (4) angeordnet ist,
- mindestens einen Achskasten (6), der auf einem Querende der Achse (4) jenseits des Rads (8) gemäß der Querrichtung angeordnet ist, wobei die Achse (4) hinsichtlich der Drehung in diesem Achskasten (6) beweglich ist,
- eine Primäraufhängung (10), die zwischen dem Chassis (2) und dem Achskasten (6) montiert ist, wobei die Aufhängung (10) ein vertikales Federelement (12), das für die Aufhängung der Achse (4) in Bezug auf das Chassis (2) gemäß einer vertikalen Richtung angeordnet ist, wobei das vertikale Federelement (12) auf einem mit dem Achskasten (6) verbundenen Trägerelement (18) gegenüberliegend zum Querende der Achse (4) angeordnet ist, und mindestens ein erstes längsgerichtetes und quergerichtetes Aufhängungselement (14) umfasst, das ausgebildet ist, die Achse (4) in Bezug auf das Chassis (2) gemäß der Längs- und Querrichtung aufzuhängen, wobei das erste längsgerichtete und quergerichtete Aufhängungselement (14) in einem ersten Trägeraufnahmeraum (26) angeordnet ist, der sich auf einer Seite des Trägerelements (18) gemäß der Längsrichtung erstreckt,
**dadurch gekennzeichnet, dass** die Mitte (32) des ersten Trägeraufnahmeraums (26) gemäß der Querrichtung zu dem Drehgestell (1) nach außen in Bezug auf die Mitte (20) des Trägerelements (18) versetzt ist, derart, dass der Abstand (d'), der das Rad (8) von der Mitte (32) des ersten Trägeraufnahmeraums (26) trennt, größer ist als der Abstand (d), der das Rad (8) von der Mitte (20) des Trägerelements (18) gemäß der Querrichtung trennt.

2. Drehgestell nach Anspruch 1, **dadurch gekennzeichnet, dass** die Primäraufhängung (10) ein zweites längsgerichtetes und quergerichtetes Aufhängungselement (16) umfasst, wobei das zweite längsgerichtete und quergerichtete Aufhängungselement (16) in einem zweiten Trägeraufnahmeraum (28) angeordnet ist, der sich auf der anderen Seite des Trägerelements (18) gemäß der Längsrichtung in Bezug auf den ersten Trägeraufnahmeraum (26) erstreckt.

3. Drehgestell nach Anspruch 2, **dadurch gekennzeichnet, dass** die Mitte (44) des zweiten Aufnahmeraums (28) gemäß der Querrichtung zu dem Drehgestell nach Innen in Bezug auf die Mitte (20) des Trägerelements (18) versetzt ist, derart, dass der Abstand (d"), der das Rad (8) von der Mitte (44) des zweiten Trägeraufnahmeraums (28) trennt, kleiner ist als der Abstand (d), der das Rad (8) von der Mitte (20) des Trägerelements (18) trennt.

4. Drehgestell nach Anspruch 3, **dadurch gekennzeichnet, dass** der Abstand, der die Mitte (44) des zweiten Trägeraufnahmeraums (28) von der Mitte (20) des Trägerelements (18) trennt, gleich dem Abstand ist, der die Mitte (32) des ersten Trägeraufnahmeraums (26) von der Mitte (20) des Trägerelements (18) trennt.

5. Drehgestell nach einem beliebigen der Ansprüche 1 bis 4, **dadurch gekennzeichnet, dass** das längsgerichtete und quergerichtete Aufhängungselement (14, 16) von einer Feder gebildet wird, die radial komprimiert wird und sich integral im Inneren des Trägeraufnahmeraums (26, 28) erstreckt, wobei die Kompression gemäß der radialen Richtung von einer Innenwand des Aufnahmeraums (26, 28) bewirkt wird.

6. Drehgestell nach Anspruch 5, **dadurch gekennzeichnet, dass** die komprimierte Feder eine Feder der Art Gummi auf Metall ist, deren Gummiteil radial durch die Innenwand des Trägeraufnahmeraums (26, 28) komprimiert wird.

7. Drehgestell nach einem beliebigen der Ansprüche 1 bis 6, **dadurch gekennzeichnet, dass** das längsgerichtete und quergerichtete Aufhängungselement (14, 16) einen Querschnitt in ovaler Form aufweist, dessen große Achse (A), die sich durch die Mitte (32, 44) des Aufnahmeraums (26, 28) erstreckt, sich im Wesentlichen in Längsrichtung erstreckt.

8. Drehgestell nach einem beliebigen der Ansprüche 1 bis 7, **dadurch gekennzeichnet, dass** der Trägeraufnahmeraum (26, 28) der längsgerichteten und quergerichteten Aufhängung (14, 16) in einem einziges Teil mit dem Achskasten (6) hergestellt ist.

9. Drehgestell nach einem beliebigen der Ansprüche 1 bis 8, **dadurch gekennzeichnet, dass** das vertikale Federelement (12) eine Spiralfeder ist, die sich zwischen dem Trägerelement (18) und dem Chassis (2) gemäß einer im Wesentlichen senkrechten Richtung zu der längsgerichteten und der quergerichteten Richtung erstreckt.

10. Drehgestell nach einem beliebigen der Ansprüche 1 bis 9, **dadurch gekennzeichnet, dass** es mindestens eine Bremsscheibe (40) umfasst, die in dem Rad (8) um die Achse (4) herum gegenüber des Achskastens (6) montiert ist.

11. Drehgestell nach Anspruch 10, **dadurch gekennzeichnet, dass** es eine Vorrichtung zum Betätigen der Bremse umfasst, wobei die Vorrichtung durch eine Gabel (38) gebildet wird, die Bremsschuhe (42) trägt, die vorgesehen sind, um die Bremsscheibe (40) zu klemmen, wenn die Betätigungsvorrichtung betätigt wird, wobei einer der Arme (36) der Gabel (38) sich in den Raum erstreckt, der das Rad (8) des ersten Trägeraufnahmeraums (26) von dem ersten längsgerichteten und quergerichteten Aufhängungselement (14) trennt.

## Claims

1. A railway vehicle bogie (1) comprising :
- a chassis (2) extending substantially longitudinally;
- at least one axle (4) extending substantially transversely and rotatably mounted relatively to the chassis (2), a wheel (8) being mounted on each of the transverse extreme portions of said axle (4),
- at least one axle box (6) mounted on a transverse end of the axle (4), beyond a wheel (8) along the transverse direction, the axle (4) being rotatably mobile in said axle box (6),
- a primary suspension (10) mounted between the chassis (2) and the axle box (6), said suspension (10) comprising a vertical suspension element (12) laid out for suspending the axle (4) relatively to the chassis (2) along a vertical direction, said vertical suspension element (12) being positioned on a supporting element (18) attached to the axle box (6) above the transverse end of the axle (4), and at least one first longitudinal and transverse suspension element (14) laid out so as to suspend the axle (4) relatively to the chassis (2) along the longitudinal and transverse directions, said first longitudinal and transverse suspension element (14) being positioned in a first supporting housing (26) extending on one side of the supporting element (18) along the longitudinal direction,
**characterized in that** the center (32) of the first supporting housing (26) is shifted outwards from the bogie (1) along the transverse direction relatively to the center (20) of the supporting element (18) so that the distance (d') separating the wheel (8) from the center (32) of the first supporting housing (26) is greater than the distance (d) separating the wheel (8) from the center (20) of the supporting element (18).

2. The bogie according to claim 1, **characterized in that** the primary suspension (10) comprises a second longitudinal and transverse suspension element (16), said second longitudinal and transverse suspension element (16) being positioned in a second supporting housing (28) extending on the other side of the supporting element (18) along the longitudinal direction relatively to the first supporting housing (26).

3. The bogie according to claim 2, **characterized in that** the center (44) of the second supporting housing (28) is shifted towards the inside of the bogie along the transverse direction relatively to the center (20) of the supporting element (18) so that the distance (d") separating the wheel (8) from the center (44) of the second supporting housing (28) is less than the distance (d) separating the wheel (8) from the center (20) of the supporting housing (18).

4. The bogie according to claim 3, **characterized in that** the distance separating the center (44) of the second supporting housing (28) from the center (20) of the supporting element (18) is equal to the distance separating the center (32) of the first supporting housing (26) from the center (20) of the supporting element (18).

5. The bogie according to any of claims 1 to 4, **characterized in that** the longitudinal and transverse suspension element (14, 16) is formed by a radially compressed spring entirely extending inside the supporting housing (26, 28), the compression along the radial direction being carried out by an internal wall of said housing (26, 28).

6. The bogie according to claim 5, **characterized in that** the compressed spring is a spring of the rubber-on-metal type, the rubber portion of which is radially compressed by the internal wall of the supporting housing (26, 28).

7. The bogie according to any of claims 1 to 6, **characterized in that** the longitudinal and transverse suspension element (14, 16) has a section with an ovoidal shape, the major axis (A) of which, passing through the center (32, 44) of the supporting housing (26, 28), extends substantially longitudinally.

8. The bogie according to any of claims 1 to 7, **characterized in that** the supporting housing (26, 28) of the longitudinal and transverse suspension (14, 16) is made in a single piece with the axle box (6).

9. The bogie according to any of claims 1 to 8, **characterized in that** the vertical suspension element (12) is a helicoidal spring extending between the supporting element (18) and the chassis (2) along a direction substantially perpendicular to the longitudinal and transverse directions.

10. The bogie according to any of claims 1 to 9, **characterized in that** it comprises at least one brake disc (40) mounted in the wheel (8) around the axle (4) facing the axle box (6).

11. The bogie according to claim 10, **characterized in that** it comprises a device for actuating the brake, said device being formed with a yoke (38) bearing braking shoes (42) laid out for clasping the brake disc (40) when the actuation device is actuated, one of the branches (36) of said yoke (38) extending in the space separating the wheel (8) from the first housing (26) for supporting the first longitudinal and transverse suspension element (14).
